# FASCICULE DE BREVET EUROPEEN

(11) **EP 4 063 223 B1**
(45) Date de publication et mention de la délivrance du brevet: **01.05.2024**
(21) Numéro de dépôt: 22164197.0
(22) Date de dépôt: 24.03.2022
(51) Int. Cl.: B60W 60/00, G05D 1/00, G06F 11/16, B60T 7/12, B60W 50/023, B60W 50/02, B60W 50/029, B60T 8/88, B60W 10/18, B60W 10/20

(54) **DISPOSITIF DE CONTRÔLE D'UN ANGLE DE BRAQUAGE D'UN VÉHICULE AUTOMOBILE AUTONOME OU DU FREINAGE DU VÉHICULE AUTOMOBILE AUTONOME, ET VÉHICULE COMPRENANT CE DISPOSITIF**
VORRICHTUNG ZUR STEUERUNG EINES LENKWINKELS ODER DES BREMSVORGANGS EINES AUTONOMEN KRAFTFAHRZEUGS UND FAHRZEUG MIT DIESER VORRICHTUNG
DEVICE FOR CONTROLLING A STEERING ANGLE OF AN AUTONOMOUS MOTOR VEHICLE OR THE BRAKING OF THE AUTONOMOUS MOTOR VEHICLE, AND VEHICLE COMPRISING SAID DEVICE

(30) Priorité: 26.03.2021 FR 2103097
(43) Date de publication de la demande: 28.09.2022
(73) Titulaire: TRANSDEV GROUP INNOVATION, 92130 Issy-les-Moulineaux (FR)
(72) Inventeur: MIRANDA, Paulo, 78960 Voisins le Bretonneux (FR); DESMOINEAUX, Nicolas, 92400 Courbevoie (FR); VALLOT, Laurent, 28000 Chartres (FR); TAINHA, Jean Michel, 78000 Versailles (FR)
(74) Mandataire: Lavoix

(56) Documents cités:
- DE-A1-102012 021 564
- US-A1- 2019 283 768
- US-B2- 10 202 090

## Description

La présente invention concerne un dispositif de contrôle d'un angle de braquage d'un véhicule automobile autonome ou du freinage du véhicule automobile autonome.

La présente invention concerne en outre un véhicule automobile autonome comprenant un tel dispositif.

L'invention concerne le domaine du pilotage automatique de véhicules automobiles, en particulier de la sécurité du pilotage de tels véhicules.

Pour pouvoir circuler en autonomie totale alors qu'il embarque des passagers, un véhicule automobile autonome doit satisfaire à des contraintes de sécurité drastiques. En particulier, le véhicule doit être capable de détecter une défaillance de fonctionnement, afin de pouvoir mettre le véhicule en sécurité.

En particulier, les actionneurs permettant de freiner le véhicule ou de piloter la direction doivent recevoir des commandes qui sont intègres, à savoir dépourvues de valeurs aberrantes, et correspondant à des consignes déterminées pour le pilotage.

La sécurité des commandes peut être augmentée par des redondances de calcul de ces commandes avant l'envoi aux actionneurs.

Par exemple, le document US 10,202,090 B2 décrit trois processeurs calculant des commandes qui sont envoyées à un composant logique programmable, qui choisit l'une des commandes calculées et la transmet aux actionneurs.

Cependant, de tels systèmes peuvent encore être améliorés. En particulier, de tels systèmes sont dépendants d'un fonctionnement correct du composant logique programmable.

Un but de l'invention est alors d'obtenir un dispositif de contrôle d'un angle de braquage d'un véhicule automobile autonome ou du freinage du véhicule automobile autonome qui est particulièrement simple, tout en garantissant une grande fiabilité.

A cet effet, l'invention a pour objet un dispositif de contrôle selon la revendication 1.

Suivant d'autres aspects avantageux de l'invention, le dispositif de contrôle est selon l'une quelconque des revendications 2 à 12.

L'invention a également pour objet un véhicule automobile autonome selon la revendication 13.

Ces caractéristiques de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un véhicule automobile autonome comprenant un dispositif de contrôle selon un premier mode de réalisation de l'invention ; et,
[Fig 2] la figure 2 est une représentation schématique analogue à la figure 1 selon un second mode de réalisation de l'invention.

### PREMIER MODE DE REALISATION : braquage

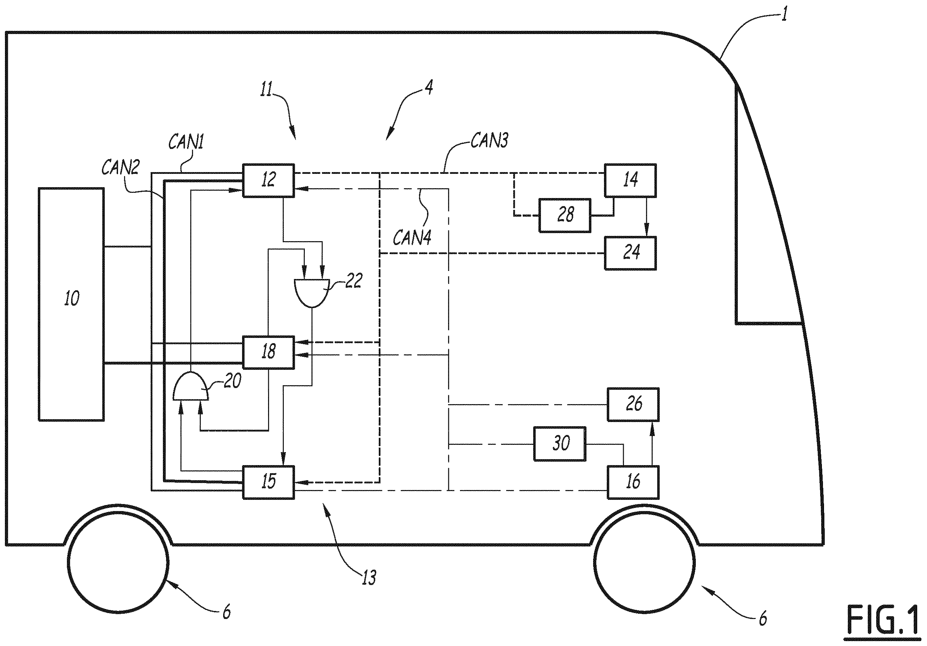

Sur la figure 1, un véhicule automobile autonome 1 selon un premier mode de réalisation comprend un dispositif de contrôle 4 et une pluralité de roues 6.

Dans ce premier mode de réalisation, au moins l'une des roues 6 est une roue directrice et le dispositif de contrôle 4 est destiné à piloter automatiquement le véhicule 1 en modifiant un angle de braquage de la roue directrice.

Le dispositif de contrôle 4 comprend : un système de pilotage automatique 10 ; une chaîne de commande primaire 11 constituée d'un contrôleur primaire 12, d'un actionneur primaire 14, d'un premier capteur d'angle 24 et d'un premier capteur de courant 28 ; une chaîne de commande secondaire 13 constituée d'un contrôleur secondaire 15, d'un actionneur secondaire 16, d'un second capteur d'angle 26 et d'un second capteur de courant 30 ; et un contrôleur de référence 18.

Le dispositif 4 comporte un module d'opération 20 effectuant une opération logique entre deux signaux de défaillance du contrôleur primaire 12, reçus respectivement du contrôleur secondaire 15 et du contrôleur de référence 18, pour générer un signal d'interruption INT1, qui est appliqué au contrôleur primaire 12 et qui le désactive en cas de détection d'un dysfonctionnement du contrôleur primaire 12.

Le module d'opération 20 est configuré pour interrompre le fonctionnement du contrôleur primaire 12.

Par l'expression « interrompre le fonctionnement du contrôleur primaire », il est entendu une coupure de l'alimentation électrique du contrôleur primaire 12.

Le dispositif 4 comporte de préférence un module additionnel d'opération 22 effectuant une opération logique entre deux signaux de défaillance du contrôleur secondaire 15, reçus respectivement du contrôleur primaire 12 et du contrôleur de référence 18, pour générer un signal d'interruption INT2, qui est appliqué au contrôleur secondaire 15 et qui le désactive en cas de détection d'un dysfonctionnement du contrôleur secondaire 15.

Le module additionnel d'opération 22 est configuré pour interrompre le fonctionnement du contrôleur secondaire 15.

Par l'expression « interrompre le fonctionnement du contrôleur secondaire », il est entendu une coupure de l'alimentation électrique du contrôleur secondaire 15.

Le dispositif de contrôle 4 comporte des premier, second, troisième et quatrième bus de communication, respectivement CAN1, CAN2, CAN3 et CAN 4. Les premier, second, troisième et quatrième bus sont distincts. En particulier, aucun échange de données n'est possible entre les bus CAN1 à CAN4 l'un par rapport à l'autre. Par exemple, les premier, second, troisième et quatrième bus de communication mettent en oeuvre le protocole de communication CanBus.

Le premier bus CAN1 connecte une sortie du système 10 à une entrée du contrôleur primaire 12, à une entrée du contrôleur secondaire 15 et à une entrée du contrôleur de référence 18. En complément, le bus CAN1 connecte également des sorties des contrôleurs 12, 15 et 18 à une entrée du système 10.

En redondance du premier bus, le second bus CAN2 connecte la sortie du système 10 à l'entrée du contrôleur primaire 12, à l'entrée du contrôleur secondaire 15 et à l'entrée du contrôleur de référence 18. En complément, le bus CAN2 connecte également des sorties des contrôleurs 12, 15 et 18 à une entrée du système 10. Le second bus CAN2 est optionnel. Il permet d'augmenter la sécurité du dispositif de contrôle 4 en fournissant de préférence le même signal que le premier bus CAN1. Le troisième bus CAN 3 connecte une sortie du contrôleur primaire 12 à une entrée de l'actionneur primaire 14, mais également à une entrée du contrôleur secondaire 15 et à une entrée du contrôleur de référence 18. Le troisième bus relie également les capteurs primaires 24 et 28 en entrée du contrôleur primaire 12.

De manière symétrique, le quatrième bus CAN4 connecte une sortie du contrôleur secondaire 15 à une entrée de l'actionneur secondaire 16, mais également à une entrée du contrôleur primaire 12 et à une entrée du contrôleur de référence 18. Le quatrième bus connecte également les capteurs secondaires 26 et 30 en entrée du contrôleur secondaire 15.

De préférence, le dispositif de contrôle 4 comprend deux sources d'alimentation électrique (non représentées sur la figure 1), qui sont distinctes l'une de l'autre. La première source est configurée pour alimenter la chaîne de commande primaire 11. La deuxième source est configurée pour alimenter la chaîne de commande secondaire 13. Cela permet d'éviter des modes communs de défaillance associés à l'alimentation en puissance électrique.

De préférence, et à l'exception des autres éléments de la chaîne de commande secondaire 13, le contrôleur de référence 18 est apte à être alimenté soit par la première, soit par la deuxième source d'alimentation. Par exemple, le contrôleur de référence 18 est configuré pour être alimenté par la première source.

De préférence, le dispositif de contrôle 4 comprend au moins un dispositif de pilotage manuel, non représenté, configuré pour générer une commande de braquage manuelle et/ou une commande d'arrêt manuelle. Un tel dispositif de pilotage manuel permet à un opérateur soit de conduire le véhicule (phase de pilotage manuel), soit de reprendre la main sur le pilotage du véhicule en cas d'identification par l'opérateur d'un problème (phase de test du véhicule).

Le système de pilotage automatique 10 est par exemple un calculateur comprenant une mémoire et un processeur. Il est par exemple programmé pour calculer une trajectoire que doit suivre le véhicule 1 et pour générer, à chaque instant d'échantillonnage du dispositif de contrôle 4, une consigne de conduite automatique de véhicule. Dans le premier mode de réalisation, la consigne de conduite automatique délivrée par le système 10 est une consigne de braquage CNS1 et CNS2 de l'angle de la roue directrice.

Le système 10 est propre à émettre la consigne de braquage CNS1 sur le premier bus CAN 1. Avantageusement, une réplique de la consigne de braquage CNS2 est émise sur le second bus CAN2. Cela permet au contrôleur 12 et 15 de vérifier la cohérence entre les consignes, et de commander une mise en sécurité, tel qu'un arrêt, si les consignes ne sont pas cohérentes.

Le contrôleur primaire 12 est par exemple un calculateur comprenant une mémoire et un processeur. Il est programmé pour générer une commande primaire CMD1 en fonction de la consigne CNS1 reçue du système 10.

Le contrôleur primaire 12 est propre à émettre la commande primaire CMD1 générée sur troisième bus CAN 3, à destination de l'actionneur primaire 14, mais également du contrôleur secondaire 15 et du contrôleur de référence 18.

L'actionneur primaire 14 est un actionneur à commande électrique. L'actionneur primaire 14 est par exemple un produit vendu sur étagère, également appelé produit COTS (de l'anglais « Commercial off-the-shelf »).

L'actionneur primaire 14 intègre un moteur capable d'exercer un couple mécanique permettant de modifier l'angle de braquage à la roue directrice. Ce couple est généré en fonction de la commande primaire CMD1, directement reçue du contrôleur primaire 12.

Par « directement reçue », il est entendu une réception via transmission par un bus, ici le troisième bus CAN3, en l'absence d'un passage de la commande par d'autres éléments.

De préférence, l'actionneur primaire 14 n'est activé que lorsque l'actionneur secondaire 16 est désactivé et est désactivé lorsque l'actionneur secondaire est activé. Par exemple, l'actionneur primaire 14 est activé lorsqu'il reçoit un signal d'activation du contrôleur primaire 12. Lorsque le contrôleur primaire 12 est désactivé, il ne peut plus émettre ce signal d'activation, ce qui a pour conséquence de désactiver l'actionneur primaire 14. Ce signal d'activation est également émis par le contrôleur primaire 12 sur le troisième bus CAN3.

Selon un exemple, l'actionneur primaire 14 est propre à recevoir un signal d'interruption du contrôleur primaire 12, par exemple si le contrôleur 12 détecte un dysfonctionnement de l'actionneur 14.

L'actionneur primaire 14 comprend en outre un capteur interne propre à générer un signal de mesure interne, correspondant à une mesure de l'angle de braquage conféré par l'actionneur primaire 14, et pour le transmettre au contrôleur primaire 12 via le troisième bus CAN3.

En redondance du capteur interne de l'actionneur primaire 14, le premier capteur d'angle 24 mesure un angle de braquage effectivement conféré par l'actionneur primaire 14 à la roue directrice.

Le capteur d'angle 24 est indépendant de l'actionneur 14 et permet d'obtenir, en plus du signal de mesure interne, une autre mesure de l'angle de braquage à des fins de diagnostic du bon fonctionnement de l'actionneur 14. Le capteur d'angle 24 est configuré pour transmettre la mesure effectuée au contrôleur primaire 12. Ce dernier est configuré pour réaliser ce diagnostic et détecter la survenue d'une défaillance de l'actionneur primaire 14.

Le premier capteur de courant 28 détecte le niveau de l'alimentation électrique de l'actionneur primaire 14. En particulier, le premier capteur de courant 28 est configuré pour mesurer l'intensité de courant électrique alimentant l'actionneur primaire 14.

Le premier capteur de courant 28 est relié au troisième bus CAN3 pour transmettre, au contrôleur primaire 12, un signal de mesure de l'alimentation électrique de l'actionneur primaire 14 permettant au contrôleur primaire 12 de commander l'arrêt de l'actionneur primaire 14 lorsque le couple sur la roue directrice doit être exercé par l'actionneur secondaire 16, dans le cas où le signal de mesure comprend une valeur de l'intensité de courant mesurée par le premier capteur de courant 28 supérieure à un seuil. Cela permet d'éviter qu'à la fois l'actionneur 14 et l'actionneur 16 exercent un couple.

Grâce au premier capteur de courant 28 permettant de détecter un fonctionnement intempestif de l'actionneur 14, ensemble avec la surveillance de la commande primaire CMD1 par le contrôleur secondaire 15 et le contrôleur de référence 18, la robustesse de la chaîne de commande primaire 11 est augmentée.

Grâce à la comparaison du signal de mesure interne de l'angle de braquage avec la mesure du premier capteur d'angle 24, combinée avec la surveillance de la commande primaire CMD1 par le contrôleur secondaire 15 et le contrôleur de référence 18, la robustesse de la chaîne de commande primaire 11 est également augmentée.

Par exemple, chacun des éléments de la chaîne de commande primaire 11 est surveillé par deux autres éléments : l'actionneur primaire 14 est surveillé via le capteur de courant 28 et via la comparaison du signal de mesure interne avec le signal de mesure du capteur d'angle 24 ; le contrôleur primaire 12 est surveillé via les contrôleurs 15 et 18.

La chaîne de commande secondaire 13 vient en redondance de la chaine primaire 11. Elle est distincte de la chaîne de commande primaire pour éviter les modes de défaillance communs aux deux chaînes.

Le contrôleur secondaire 15 est par exemple un calculateur comprenant une mémoire et un processeur. Il est programmé pour générer une commande secondaire CMD2 en fonction de la consigne CNS1 reçue du système 10 et/ou de la consigne CNS2. Le contrôleur secondaire 15 est synchronisé avec le contrôleur primaire 14 pour générer la commande secondaire CMD2 simultanément à la génération de la commande primaire CMD1 par le contrôleur primaire 12. Le contrôleur secondaire 15 forme une redondance dite « à chaud » du contrôleur primaire 12.

Le contrôleur secondaire 15 est propre à émettre la commande secondaire CMD2 sur le quatrième bus CAN4 à destination de l'actionneur secondaire 16, mais aussi du contrôleur primaire 12 et du contrôleur de référence 18.

L'actionneur secondaire 16 est similaire à l'actionneur primaire 14. L'actionneur secondaire 16 forme une redondance dite « à froid » de l'actionneur 14. Il est activé uniquement lorsque l'actionneur primaire 14 et le contrôleur primaire 12 sont inactivés comme cela sera décrit ci-dessous. Par exemple, pour être activé, l'actionneur secondaire 16 reçoit un signal d'activation du contrôleur secondaire 15. Une fois activé, l'actionneur secondaire 16 est propre à prendre en compte la commande secondaire CMD2, directement reçue du contrôleur secondaire 15. Il applique alors un couple conférant un angle de braquage à la roue directrice à la place de l'actionneur primaire 14. L'angle de braquage appliqué est une fonction de la commande secondaire CMD2.

Le second capteur d'angle 26 mesure l'angle de braquage effectivement conféré par l'actionneur secondaire 16 à la roue directrice. Cette mesure d'angle de braquage vient en supplément de celle réalisée par le capteur interne de l'actionneur secondaire 16. Le capteur d'angle 26 est utilisé dans la chaîne de commande secondaire comme le capteur d'angle 24 dans la chaîne de commande primaire.

Le second capteur de courant 30 détecte le niveau de l'alimentation électrique de l'actionneur secondaire 16. Le capteur de courant 30 présente un fonctionnement analogue au capteur de courant 28.

Comme indiqué ci-dessus, les chaînes de commande primaire 11 et secondaire 13 sont distinctes. De préférence, le contrôleur primaire 12 est apte à envoyer la commande à l'actionneur primaire 14, mais est inapte à envoyer cette commande à l'actionneur secondaire 16 selon le premier mode de réalisation. Cela est illustré sur la figure 1 qui montre une flèche du quatrième bus CAN4 entrant dans le contrôleur primaire 12, symbolisant alors que le contrôleur primaire est inapte à envoyer de commande via le quatrième bus CAN4, de préférence à l'exception d'un signal de vie décrit ci-dessous.

Le dispositif 4 est configuré pour mettre en oeuvre une surveillance mutuelle du bon fonctionnement des contrôleurs 12 et 15 à l'aide du contrôleur de référence 18 et des modules d'opération 20, 22, comme le sera décrit dans ce qui suit.

Le contrôleur de référence 18 est par exemple un calculateur comprenant une mémoire et un processeur. Il est programmé pour calculer une commande de référence en fonction de la consigne CNS1 et/ou CNS2 reçue du système 10.

Il est programmé pour comparer cette commande de référence avec la commande primaire CMD1 reçue du contrôleur primaire 12 pour le même pas de temps.

De préférence, le contrôleur 18 est synchronisé avec le contrôleur primaire 12 pour générer la commande de référence simultanément à la génération de la commande primaire. En complément facultatif, le contrôleur 18 est synchronisé avec le contrôleur secondaire 15 pour générer la commande de référence simultanément à la génération de la commande secondaire.

De préférence, le contrôleur primaire 12, le contrôleur secondaire 15 et le contrôleur de référence 18 comprennent des instructions de calcul internes qui permettent d'obtenir des commandes identiques l'une par rapport à l'autre en l'absence d'une défaillance. De préférence, ces instructions sont codées de manière différente sur les trois contrôleurs. Cela permet d'éviter la non détection d'erreurs de code propagées aux trois contrôleurs qui deviendraient, de fait, non détectables.

Lorsque la commande primaire CMD1 diffère de la commande de référence, considérant alors que le contrôleur primaire 12 est défaillant, le contrôleur de référence 18 émet un signal de défaillance DEF1 vers le module d'opération 20.

Le contrôleur de référence 18 est également programmé pour comparer cette commande de référence avec la commande secondaire CMD2 reçue du contrôleur secondaire 15 pour le même pas de temps.

Lorsque la commande secondaire CMD2 diffère de la commande de référence, considérant alors que le contrôleur secondaire 15 est défaillant, le contrôleur de référence 18 émet un signal de défaillance DEF2 vers le module additionnel d'opération 22.

Le contrôleur primaire 12 est configuré pour comparer la commande secondaire CMD2, reçue à l'instant courant du contrôleur secondaire 15, avec la commande primaire CMD1, qu'il a calculée au même instant.

Lorsque la commande primaire CMD1 diffère de la commande secondaire CMD2, considérant alors que le contrôleur secondaire 15 est défaillant, le contrôleur primaire 12 émet un signal de défaillance DEF3 vers le module additionnel d'opération 22.

Pareillement, le contrôleur secondaire 15 est configuré pour comparer la commande primaire CMD1, reçue à l'instant courant du contrôleur primaire 12, avec la commande secondaire CMD2, qu'il a calculée au même instant.

Lorsque la commande secondaire CMD2 diffère de la commande primaire CMD1, considérant alors que le contrôleur primaire 12 est défaillant, le contrôleur secondaire 15 émet un quatrième signal de défaillance DEF4 vers le module d'opération 20.

Le module d'opération 20 est par exemple configuré pour effecteur une opération du type ET sur les signaux DEF1 et DEF4 du contrôleur secondaire 15 et du contrôleur de référence 18.

Le signal d'interruption INT1 produit est appliqué au contrôleur primaire 12. Lorsque le niveau du signal INT1 est bas, le contrôleur primaire 12 reste activé et c'est la chaîne de commande primaire 11 qui gère le braquage de la roue directrice. Lorsque le niveau du signal INT1 est haut, ce qui correspond à la réception par le module 20 à la fois du signal DEF1 et du signal DEF4, le contrôleur primaire 12 est désactivé et le contrôleur secondaire 15 est activé et c'est la chaîne de commande secondaire 13 qui gère le braquage de la roue directrice.

Le module additionnel d'opération 22 est par exemple configuré pour effecteur une opération du type ET sur les signaux DEF2 et DEF3 du contrôleur de référence 18 et du contrôleur primaire 12.

Le signal d'interruption INT2 produit est appliqué au contrôleur secondaire 15. Lorsque le niveau du signal INT2 est bas, le contrôleur secondaire 15 reste dans son mode de fonctionnement courant (s'il était inactif, il reste inactif, s'il est activé, il reste activé). Lorsque le niveau du signal INT2 est haut, ce qui correspond à la réception par le module 22 à la fois du signal DEF2 et du signal DEF3, le contrôleur secondaire 15 est désactivé. S'il était actif, alors le dispositif de contrôle 4 bascule dans un état de repli sécuritaire conduisant à un arrêt d'urgence du véhicule 1.

S'il était déjà inactif, ne change rien puisque c'est la chaîne primaire qui gère le braquage de la roue directrice. Cependant, du fait que désormais la redondance fournie par la chaîne de commande secondaire est manquante, le contrôleur primaire 12 commande de préférence un arrêt du véhicule 1, par exemple à une prochaine station d'arrêt prévue. En outre, si la chaîne primaire connaît alors une défaillance, le dispositif 4 bascule immédiatement dans l'état de repli sécuritaire, impliquant par exemple un arrêt immédiat du véhicule 1.

Lors du fonctionnement du dispositif de contrôle, de préférence, le bon fonctionnement des premier, deuxième, troisième et quatrième bus CAN1 à CAN 4 est surveillé.

Pour ce faire, au moins un des contrôleurs 12, 15, 18 émet périodiquement un signal de vie spécifique à ce contrôleur 12, 15, 18 sur au moins un bus parmi le premier bus CAN1, le second bus CAN2, le troisième bus CAN3 et le quatrième bus CAN4 pour déterminer l'état de fonctionnement du ou des bus de communication CAN1 à CAN4 sur lequel / lesquels le signal de vie est émis.

Par exemple, le contrôleur primaire 12 émet, sur le premier bus CAN1, un signal de vie comprenant une caractéristique spécifique au contrôleur 12 et comprenant une valeur de compteur qui est incrémenté à chaque émission du signal de vie. Le signal de vie comprend en outre une somme de contrôle (de l'anglais « checksum ») générée à partir de la caractéristique et du compteur.

Le contrôleur 15 comprend un compteur qui est augmenté à chaque réception du signal de vie du contrôleur primaire 12. Le contrôleur 15 compare la valeur de compteur du signal de vie reçu avec son propre compteur pour déterminer s'il a effectivement reçu le signal de vie courant. Aussi, le contrôleur 15 calcule la somme de contrôle à partir du signal de vie reçu et la compare avec la somme de contrôle comprise dans ledit signal. Cela permet de déterminer le bon fonctionnement du premier bus CAN1.

En complément, le contrôleur primaire 12 émet le signal de vie également sur les bus CAN2, CAN3 et CAN4 pour une surveillance analogue de ces bus.

En complément, le contrôleur 18 vérifie de la même manière le fonctionnement des bus CAN1 à CAN4.

De préférence, chaque contrôleur 12, 15, 18 émet un signal de vie du type précité sur chaque bus CAN1 à CAN4, qui est analysé par les deux autres contrôleurs recevant le signal de vie respectif. Cela permet de déterminer le bon fonctionnement de l'ensemble des bus CAN1 à CAN4, et aussi de vérifier la non-interruption d'un des contrôleurs 12, 15 ou 18.

Lors du fonctionnement nominal, la chaîne de commande primaire 11 et la chaîne de commande secondaire 13 sont alternativement opérationnelles. Cela permet d'anticiper une défaillance de la chaîne de commande primaire 11 et de réduire l'usure de l'actionneur primaire 14. Par exemple, le contrôleur 12 ou 15 de la chaîne de commande qui est opérationnelle à un instant donné comporte un jeton indiquant que cette chaîne est opérationnelle. De préférence, le contrôleur 15 vérifie que seulement l'un des contrôleurs 12 et 15 a ce jeton, et fait commander un arrêt du véhicule, par exemple par une commande au système 10, sinon.

Dans ce qui suit, des cas de défaillance d'une partie du dispositif de contrôle 4 sont décrits. Le tableau suivant récapitule des cas de défaillance des contrôleurs 12 et 15 pour le cas où le contrôleur 18 est opérationnel sans défaillance. Dans la première ligne et la première colonne sont indiqués des états des contrôleurs 12 et 15.

Par l'état « fonctionnel », il est entendu que le signal d'interruption INT1, INT2 à destination de ce contrôleur est bas, et par l'état « non fonctionnel », il est entendu que le signal d'interruption correspondant est haut.

Les quatre cases du tableau montrent des conséquences pour le dispositif de contrôle 4 pour les combinaisons d'états des contrôleurs 12 et 15, décrites ci-après.

Lorsque le contrôleur 12 et le contrôleur 15 sont fonctionnels, généralement l'actionneur 14 génère le couple de braquage en fonction de la commande primaire CMD1, à l'exception de la configuration facultative décrite ci-dessus, selon laquelle le système de pilotage 10 commande un basculement de la chaîne primaire 11 à la chaîne secondaire 13 après une durée prédéterminée de fonctionnement. L'actionneur 16 est inactif, car il ne reçoit pas de signal d'activation.

Lorsque le contrôleur 12 est fonctionnel, mais le contrôleur 15 n'est pas fonctionnel, la chaîne primaire 11 reste active et l'actionneur 14 pilote la roue directrice.

Lorsque le contrôleur 12 est non-fonctionnel, mais le contrôleur 15 est fonctionnel, le contrôleur primaire 12 est alors désactivé et le contrôleur secondaire 15 active l'actionneur secondaire 16 pour piloter la roue directrice.

Lorsqu'à la fois le contrôleur 12 et le contrôleur 15 sont non-fonctionnels, un arrêt d'urgence est commandé par le système 10.

Par exemple lorsque le contrôleur 18 émet à la fois le signal de défaillance DEF1 et DEF2, considérant alors que les deux contrôleurs 12 et 15 sont défaillants, le contrôleur 18 commande, via le système 10, une mise en sécurité du véhicule, telle qu'un arrêt à une prochaine station prévue.

**[Tableau 1]**

| | Contrôleur 12 fonctionnel | Contrôleur 12 non fonctionnel |
|---|---|---|
| Contrôleur 15 fonctionnel | Actionneur 14 pilote la roue directrice / actionneur 16 inactif | Actionneur 16 pilote la roue directrice / contrôleur 12 et actionneur 14 inactifs |
| Contrôleur 15 non fonctionnel | Actionneur 14 pilote la roue directrice / actionneur 16 inactif | Arrêt d'urgence sans contrôle du braquage |

Si le contrôleur 12 ou 15 ne reçoit pas le signal de vie du contrôleur 18 via les bus CAN1 à CAN4, il détermine que le contrôleur 18 est non fonctionnel. Dans ce cas, le contrôleur 12 ou 15 envoie un signal au système de pilotage 10 pour demander une mise en sécurité du véhicule, telle qu'un arrêt d'urgence. De préférence, la chaîne de commande qui est active lors de la constatation de la défaillance du contrôleur 18, reste active jusqu'à l'arrêt du véhicule 1.

La présente architecture permet de s'affranchir de la mise en oeuvre d'un composant programmable de vote en sortie des calculateurs. Sachant qu'un tel composant est fastidieux à mettre en oeuvre, la présente architecture constitue une simplification, permettant d'atteindre à moindre coût le niveau de sécurité requis pour un véhicule automatique.

Aussi, la robustesse de fonctionnement du dispositif 4 est augmentée, car grâce à la comparaison de signaux de défaillance, seulement un arrêt d'un contrôleur est commandé si les deux autres contrôleurs partagent l'avis que ce premier contrôleur est défaillant, et envoient ainsi les signaux de défaillance correspondants.

### SECOND MODE DE REALISATION : freinage

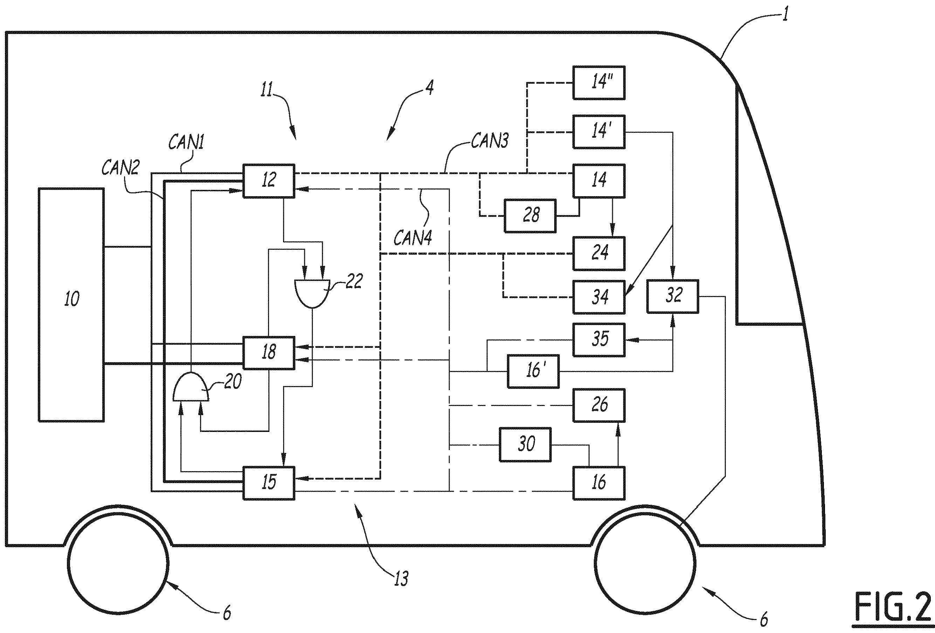

Un second mode de réalisation du véhicule selon l'invention est décrit en référence à la figure 2.

Un élément de la figure 2 analogue à un élément de la figure 1 est désigné sur la figure 2 par un chiffre de référence identique à celui utilisé pour désigner cet élément analogue sur la figure 1.

Dans ce second mode de réalisation, le véhicule 1 comprend au moins une roue 6 qui est équipée de moyens de freinage 32 aptes à appliquer une force de freinage sur la roue.

Le dispositif de contrôle 4 est alors configuré pour contrôler le freinage du véhicule 1. Pour ce faire, la consigne de conduite automatique est une consigne de freinage automatique, la commande primaire est une commande primaire de freinage, et la commande secondaire est une commande secondaire de freinage.

L'architecture du dispositif de contrôle 4 de la figure 2 est identique à celle du dispositif de contrôle 4 de la figure 1, à l'exception des différences décrites ci-après.

La partie mécanique est différente par rapport au premier mode de réalisation, permettant d'actionner un freinage au lieu d'un braquage.

Le dispositif de contrôle 4 comprend ainsi de préférence un actionneur primaire 14' qui est un frein à commande électrique et un actionneur primaire 14" qui est un frein régénératif intégré dans un moteur électrique, non représenté, du véhicule 1.

Le dispositif de contrôle 4 comprend un actionneur secondaire 16' qui est un frein auxiliaire.

Le dispositif de contrôle 4 comprend en outre au moins un capteur de pression configuré pour mesurer la pression hydraulique dans les moyens de freinage 32. Dans l'exemple de la figure 2, le dispositif de contrôle 4 comprend un premier capteur de pression 34 configuré pour mesurer une pression hydraulique appliquée dans les moyens de freinage 32 par l'actionneur primaire 14' et l'actionneur secondaire 16', et un second capteur de pression 35 configuré pour mesurer une pression hydraulique appliquée dans les moyens de freinage 32 par l'actionneur secondaire 16'.

De plus, le dispositif de contrôle 4 comprend, de préférence, au moins un dispositif de pilotage manuel, non représenté, configuré pour générer une commande de freinage manuelle et/ou une commande d'arrêt manuelle. Un tel dispositif de pilotage manuel permet à un opérateur soit de conduire le véhicule (phase de pilotage manuel), soit de reprendre la main sur le pilotage du véhicule en cas d'identification par l'opérateur d'un problème (phase de test du véhicule).

L'actionneur primaire 14' est configuré pour générer, par commande électrique, une pression hydraulique en fonction de la commande primaire de freinage aux moyens de freinage 32 pour appliquer une force de freinage sur la roue 6 en fonction de la pression hydraulique.

L'actionneur primaire 14' est relié au troisième bus CAN3 pour recevoir la commande primaire de freinage directement du contrôleur primaire 12.

L'actionneur primaire 14" est configuré pour induire une induction au sein du moteur électrique du véhicule 1, afin d'appliquer une force de freinage du véhicule 1. L'actionneur primaire 14" est relié au troisième bus CAN 3 pour recevoir la commande primaire de freinage directement du contrôleur primaire 12 permettant d'appliquer la force de freinage.

L'actionneur secondaire 16' est configuré pour appliquer, en remplacement ou en complément de l'actionneur primaire 14', une pression hydraulique sur les moyens de freinage 32.

L'actionneur secondaire 16' est relié au bus CAN4 pour recevoir la commande secondaire CMD2 directement du contrôleur secondaire 15 et pour appliquer une pression hydraulique en fonction de la commande CMD2.

En complément, l'actionneur secondaire 16' est également apte à recevoir la commande primaire CMD1 via le bus CAN4 et pour appliquer une pression hydraulique en fonction de la commande CMD1. Cela est illustré sur la figure 2, sur laquelle l'entrée/sortie du bus CAN4 du contrôleur primaire est dépourvue de flèche, cette connexion étant ainsi bidirectionnelle et permettant de transmettre la commande primaire CMD1.

A la différence du premier mode de réalisation, le contrôleur primaire 12 est ainsi de préférence apte à envoyer la commande primaire CMD1 également à l'actionneur secondaire 16', et non seulement à l'actionneur primaire 14', 14".

Les moyens de freinage 32 comprennent par exemple un circuit primaire, non représenté, relié à l'actionneur primaire 14' qui est configuré pour générer une pression dans le circuit primaire, et un circuit secondaire, relié à l'actionneur secondaire 16' qui est configuré pour générer une pression à la fois dans le circuit primaire et dans le circuit secondaire.

Le premier capteur de pression 34 est configuré pour transmettre un signal de mesure au contrôleur 12 via le bus CAN3, correspondant à une pression hydraulique exercée dans le circuit primaire, pour permettre au contrôleur 12 de déterminer si cette pression hydraulique mesurée est conforme à la commande CMD1 ou CMD2, et pour diagnostiquer une défaillance de l'actionneur 14' ou 16' le cas échéant.

Le second capteur de pression 35 est configuré pour transmettre un signal de mesure au contrôleur 15 via le bus CAN4, correspondant à une pression hydraulique exercée dans le circuit secondaire, pour permettre au contrôleur 15 de déterminer si cette pression hydraulique mesurée est conforme à la commande CMD1 ou CMD2, lorsque l'actionneur secondaire 16' exerce une pression.

Le fonctionnement des contrôleurs 12, 15 et 18 du second mode de réalisation est de préférence identique au premier mode de réalisation, notamment en ce qui concerne la surveillance mutuelle des contrôleurs.

Selon le second mode de réalisation, le contrôleur primaire 12 est configuré pour activer l'actionneur secondaire 16' pour générer la pression hydraulique aux moyens de freinage 32, après une durée prédéterminée de freinage à l'arrêt du véhicule 1 pendant laquelle l'actionneur primaire 14' génère la pression hydraulique. La durée prédéterminée est par exemple de 120 secondes.

L'homme du métier comprendra que le premier mode de réalisation et le second mode de réalisation peuvent être combinés. Dans ce cas, la consigne de conduite automatique comprend de préférence à la fois la consigne de braquage automatique et la consigne de freinage automatique. De préférence, la commande primaire comprend à la fois la commande primaire de braquage et la commande primaire de freinage. La commande secondaire comprend de préférence à la fois la commande secondaire de braquage et la commande secondaire de freinage.

L'homme du métier comprendra également que le dispositif 4 est apte à surveiller des commandes primaire CMD1 et secondaire CMD2 de tout type de commandes pour contrôler la conduite du véhicule 1. Par exemple, la commande primaire et secondaire comprend une consigne de traction pour piloter le moteur du véhicule 1.

## Revendications

1. Dispositif de contrôle (4) pour un véhicule automobile autonome (1) afin de modifier un angle de braquage d'une roue directrice du véhicule automobile autonome (1) et/ou une force de freinage générée par des moyens de freinage (32) équipant une roue du véhicule automobile autonome (1), le dispositif de contrôle (4) comprenant :
- un système de pilotage automatique (10), qui est configuré pour générer une consigne de conduite automatique du véhicule (1) ;
- une chaîne de commande primaire (11), qui comprend un contrôleur primaire (12), configuré pour générer une commande primaire en fonction de la consigne de conduite automatique, et au moins un actionneur primaire (14, 14', 14"), configuré pour générer un couple conférant un angle de braquage à la roue directrice ou configuré pour actionner les moyens de freinage (32) à partir de la commande primaire directement obtenue du contrôleur primaire (12) ;
- une chaîne de commande secondaire (13), distincte de la chaîne de commande primaire (11), comprenant un contrôleur secondaire (15) configuré pour :
+ générer une commande secondaire en fonction de ladite consigne de conduite automatique,
+ comparer ladite commande secondaire avec ladite commande primaire transmise par le contrôleur primaire (12) au contrôleur secondaire (15), et
+ émettre un premier signal de défaillance lorsque la commande primaire diffère de la commande secondaire ;
- un contrôleur de référence (18), configuré pour :
+ générer une commande de référence en fonction de la consigne de conduite automatique,
+ comparer la commande de référence avec la commande primaire transmise par le contrôleur primaire (12) au contrôleur de référence (18), et
+ émettre un second signal de défaillance lorsque la commande primaire diffère de la commande de référence ;
- un module d'opération (20), configuré pour interrompre un fonctionnement du contrôleur primaire (12) lors de la réception à la fois du premier signal de défaillance et du second signal de défaillance,
la chaîne de commande secondaire (13) comprenant en outre un actionneur secondaire (16, 16'), qui agit en redondance de l'actionneur primaire (14, 14', 14") lorsque le contrôleur primaire (12) est interrompu, l'actionneur secondaire (16, 16') étant configuré pour générer un couple conférant un angle de braquage à la roue directrice ou configuré pour actionner les moyens de freinage (32), à partir de la commande secondaire directement obtenue du contrôleur secondaire (15),
dans lequel le contrôleur primaire (12) est configuré pour comparer la commande primaire avec la commande secondaire, et pour émettre un troisième signal de défaillance lorsque la commande primaire diffère de la commande secondaire,
le contrôleur de référence (18) étant en outre configuré pour comparer la commande de référence avec la commande secondaire, et pour émettre un quatrième signal de défaillance lorsque la commande secondaire diffère de la commande de référence,
le dispositif de contrôle (4) comprenant en outre un module additionnel d'opération (22), configuré pour interrompre le fonctionnement du contrôleur secondaire (15) lors de la réception à la fois du troisième signal de défaillance et du quatrième signal de défaillance, et
dans lequel le contrôleur de référence (18) est configuré, lorsqu'il émet à la fois le second signal de défaillance et le quatrième signal de défaillance, pour transmettre un signal de mise en sécurité du véhicule (1) au système de pilotage automatique (10).

2. Dispositif de contrôle selon la revendication 1, dans lequel
le contrôleur secondaire (15) est synchronisé avec le contrôleur primaire (12) pour que les commandes primaire et secondaire soient générées simultanément, et/ou
le contrôleur de référence (18) est synchronisé avec au moins un contrôleur parmi les contrôleurs primaire (12) et secondaire (15), pour que la commande de référence et la commande générée par ledit au moins un contrôleur soient générées simultanément.

3. Dispositif de contrôle selon la revendication 1 ou la revendication 2, dans lequel le système de pilotage automatique (10) est relié au contrôleur primaire (12), au contrôleur de référence (18) et au contrôleur secondaire (15) à la fois par un premier bus de communication (CAN1) et par un second bus de communication (CAN2), distinct du premier bus de communication (CAN1), au moins un desdits contrôleurs (12, 15, 18) étant configuré pour émettre périodiquement un signal de vie, qui est spécifique de ce contrôleur (12, 15, 18), sur le premier bus de communication (CAN1) et sur le second bus de communication (CAN2), pour déterminer l'état de fonctionnement du premier bus de communication (CAN1) et du second bus de communication (CAN2).

4. Dispositif de contrôle selon l'une quelconque des revendications précédentes, dans lequel au moins un contrôleur parmi le contrôleur primaire (12), le contrôleur secondaire (15) et de contrôleur de référence (18), dit contrôleur émetteur, est configuré pour émettre périodiquement un signal de vie, qui est spécifique du contrôleur émetteur (12, 15, 18), sur un troisième bus de communication (CAN3) reliant ledit contrôleur primaire (12) à l'actionneur primaire (14, 14', 14"), au contrôleur de référence (18) et au contrôleur secondaire (15), et/ou configuré pour émettre périodiquement le signal de vie, qui est spécifique du contrôleur émetteur (12, 15, 18), sur un quatrième bus de communication (CAN4), distinct du troisième bus de communication (CAN3), qui relie le contrôleur secondaire (15) à l'actionneur secondaire (16, 16'), au contrôleur de référence (18) et au contrôleur primaire (12),
et dans lequel au moins un contrôleur parmi le contrôleur primaire (12), le contrôleur secondaire (15) et de contrôleur de référence (18), autre que le contrôleur émetteur, est configuré pour déterminer un état de fonctionnement du troisième bus de communication (CAN3) et/ou du quatrième bus de communication (CAN4) en fonction dudit signal de vie reçu du contrôleur émetteur.

5. Dispositif de contrôle selon l'une quelconque des revendications précédentes, dans lequel le dispositif de contrôle (4) comprend deux sources d'alimentation électrique distinctes, dont une première source est configurée pour alimenter la chaîne de commande primaire (11) et une deuxième source est configurée pour alimenter la chaîne de commande secondaire (13).

6. Dispositif de contrôle selon l'une quelconque des revendications précédentes, dans lequel la consigne de conduite automatique comprend une consigne de braquage automatique, la commande primaire comprend une commande primaire de braquage permettant à l'actionneur primaire (14) de générer un couple conférant un angle de braquage à la roue directrice, et la commande secondaire comprend une commande secondaire de braquage permettant à l'actionneur secondaire (16) de générer un couple conférant un angle de braquage à la roue directrice.

7. Dispositif de contrôle selon la revendication 6, dans lequel l'actionneur primaire (14) est configuré pour générer le couple uniquement lorsqu'il reçoit un signal d'activation du contrôleur primaire (12), l'actionneur primaire (14) ne générant aucun couple sinon, et/ou
l'actionneur secondaire (16) est configuré pour générer le couple uniquement lorsqu'il reçoit un signal d'activation du contrôleur secondaire (15), l'actionneur secondaire (16) ne générant aucun couple sinon.

8. Dispositif de contrôle la revendication 6 ou 7, le dispositif de contrôle (4) comprenant au moins un capteur de courant (28, 30) configuré pour mesurer l'intensité d'un courant électrique alimentant l'actionneur primaire (14) ou l'actionneur secondaire (16),
le contrôleur primaire (12) étant configuré pour commander l'arrêt de l'actionneur primaire (14) lorsque l'intensité du courant mesurée par le capteur de courant (28) est supérieure à un seuil et lorsque l'actionneur secondaire (16) génère le couple conférant un angle de braquage à la roue directrice, et/ou le contrôleur secondaire (15) étant configuré pour interrompre l'alimentation de l'actionneur secondaire (16) lorsque l'intensité du courant mesurée par le capteur de courant (30) est supérieure à un seuil et lorsque l'actionneur primaire (14) génère le couple conférant un angle de braquage à la roue directrice.

9. Dispositif de contrôle selon l'une quelconque des revendications 1 à 5, dans lequel la consigne de conduite automatique (10) comprend une consigne de freinage automatique, la commande primaire comprend une commande primaire de freinage permettant à l'actionneur primaire (14') d'appliquer une pression hydraulique aux moyens de freinage (32) en fonction de ladite commande primaire de freinage pour que les moyens de freinage (32) appliquent à leur tour une force de freinage sur la roue (6) dotée des moyens de freinage (32), et la commande secondaire comprend une commande secondaire de freinage permettant à l'actionneur secondaire (16') de générer une pression hydraulique aux moyens de freinage (32) en fonction de ladite commande secondaire de freinage pour que les moyens de freinage (32) appliquent à leur tour une force de freinage sur la roue (6) dotée des moyens de freinage (32).

10. Dispositif de contrôle selon la revendication 9, le dispositif de contrôle (4) comprenant au moins deux actionneurs primaires (14', 14"), dont l'un est un frein à commande électrique et l'un est un frein régénératif intégré dans un moteur électrique du véhicule (1), chacun parmi le frein à commande électrique et le frein régénératif étant configuré pour appliquer une force de freinage en fonction de la commande primaire de freinage.

11. Dispositif de contrôle selon la revendication 9 ou 10, dans lequel le contrôleur primaire (12) est configuré pour activer l'actionneur secondaire (16') après une durée prédéterminée pendant laquelle l'actionneur primaire (14') est activé afin de maintenir le véhicule (1) à l'arrêt.

12. Dispositif de contrôle selon l'une des revendications 9 à 11, dans lequel le dispositif de contrôle (4) comprend en outre au moins un capteur de pression (34, 35) configuré pour mesurer une pression hydraulique présente dans les moyens de freinage (32), et pour transmettre une mesure de la pression hydraulique au contrôleur primaire (12) ou au contrôleur secondaire (15) dans le but d'établir un diagnostic du fonctionnement de l'actionneur primaire (14') et/ou de l'actionneur secondaire (16').

13. Véhicule automobile autonome (1), comprenant au moins une roue (6) dotée de moyens de freinage (32) aptes à appliquer une force de freinage sur ladite roue (6), et au moins une roue directrice, **caractérisé en ce que** le véhicule (1) comprend un dispositif de contrôle (4) selon l'une quelconque des revendications précédentes.

## Patentansprüche

1. Steuervorrichtung (4) für ein autonomes Kraftfahrzeug (1) zum Ändern eines Lenkwinkels eines gelenkten Rades des autonomen Kraftfahrzeugs (1) und/oder einer Bremskraft, die von einer Bremseinrichtung (32) erzeugt wird, die an einem Rad des autonomen Kraftfahrzeugs (1) angebracht ist, wobei die Steuervorrichtung (4) umfasst:
- ein Autopilotsystem (10), das so konfiguriert ist, dass es eine Anweisung zum automatischen Fahren des Fahrzeugs (1) erzeugt;
- eine primäre Befehlskette (11), die eine primäre Steuerung (12) umfasst, die so konfiguriert ist, dass sie einen Primärbefehl in Abhängigkeit von der Anweisung für das automatische Fahren erzeugt, und mindestens einen primären Aktuator (14, 14', 14"), der zum Erzeugen eines Drehmoments, das dem gelenkten Rad einen Lenkwinkel verleiht, oder zum Betätigen der Bremseinrichtungen (32) anhand des direkt von der primären Steuerung (12) erhaltenen Primärbefehls konfiguriert ist;
- eine sekundäre Befehlskette (13), die von der primären Befehlskette (11) getrennt ist und eine sekundäre Steuerung (15) umfasst, die zu Folgendem konfiguriert ist:
+ einen Sekundärbefehl in Abhängigkeit von der genannten Anweisung für das automatische Fahren erzeugen,
+ den Sekundärbefehl mit dem Primärbefehl vergleichen, der von der primären Steuerung (12) an die sekundäre Steuerung (15) übertragen wird, und
+ ein erstes Fehlersignal ausgeben, wenn sich der Primärbefehl vom Sekundärbefehl unterscheidet;
eine Referenzsteuerung (18), die zu Folgendem konfiguriert ist:
+ einen Referenzbefehl entsprechend der Anweisung für das automatische Fahren erzeugen,
+ den Referenzbefehl mit dem Primärbefehl vergleichen, der von der primären Steuerung (12) an die Referenzsteuerung (18) übertragen wird, und
+ ein zweites Fehlersignal ausgeben, wenn der Primärbefehl vom Referenzbefehl abweicht;
- ein Betriebsmodul (20), das so konfiguriert ist, dass es einen Betrieb der primären Steuerung (12) unterbricht, wenn sowohl das erste Fehlersignal als auch das zweite Fehlersignal empfangen werden,
wobei die sekundäre Befehlskette (13) ferner einen sekundären Aktuator (16, 16') umfasst, der als Redundanz des primären Aktuators (14, 14', 14") fungiert, wenn die primäre Steuerung (12) unterbrochen ist, wobei der sekundäre Aktuator (16, 16') so ausgelegt ist, dass er ein Drehmoment erzeugt, das dem gelenkten Rad einen Lenkwinkel verleiht, oder so konfiguriert ist, dass er die Bremseinrichtung (32) betätigt, ausgehend vom Sekundärbefehl, der direkt von der sekundären Steuerung (15) erhalten wird,
wobei die primäre Steuerung (12) so konfiguriert ist, dass sie den Primärbefehl mit dem Sekundärbefehl vergleicht und ein drittes Fehlersignal ausgibt, wenn sich der Primärbefehl vom Sekundärbefehl unterscheidet,
wobei die Referenzsteuerung (18) ferner so konfiguriert ist, dass sie den Referenzbefehl mit dem Sekundärbefehl vergleicht und ein viertes Fehlersignal ausgibt, wenn der Sekundärbefehl vom Referenzbefehl abweicht,
die Steuervorrichtung (4) außerdem ein zusätzliches Betriebsmodul (22) umfasst, das so konfiguriert ist, dass es den Betrieb der sekundären Steuervorrichtung (15) bei Empfang sowohl des dritten Fehlersignals als auch des vierten Fehlersignals unterbricht, und
wobei die Referenzsteuerung (18) so konfiguriert ist, dass sie, wenn sie sowohl das zweite Fehlersignal als auch das vierte Fehlersignal ausgibt, ein Signal zum Sichern des Fahrzeugs (1) an das Autopilotsystem (10) sendet.

2. Steuervorrichtung nach Anspruch 1, wobei
die sekundäre Steuerung (15) mit der primären Steuerung (12) synchronisiert wird, so dass die primären und sekundären Befehle gleichzeitig erzeugt werden, und/oder
die Referenzsteuerung (18) mit mindestens einer der primären (12) und sekundären (15) Steuerungen synchronisiert ist, so dass der Referenzbefehl und der von der mindestens einen Steuerung erzeugte Befehl gleichzeitig erzeugt werden.

3. Steuervorrichtung nach Anspruch 1 oder 2, wobei das Autopilotsystem (10) mit der primären Steuerung (12), der Referenzsteuerung (18) und der sekundären Steuerung (15) sowohl über einen ersten Kommunikationsbus (CAN1) als auch über einen zweiten Kommunikationsbus (CAN2), der von dem ersten Kommunikationsbus (CAN1) verschieden ist, verbunden ist, wobei mindestens eine der Steuerungen (12, 15, 18) so konfiguriert ist, dass sie periodisch ein Lebenssignal, das für diese Steuerung (12, 15, 18) spezifisch ist, auf dem ersten Kommunikationsbus (CAN1) und auf dem zweiten Kommunikationsbus (CAN2) sendet, um den Betriebszustand des ersten Kommunikationsbusses (CAN1) und des zweiten Kommunikationsbusses (CAN2) zu bestimmen.

4. Steuervorrichtung nach einem der vorhergehenden Ansprüche, wobei mindestens eine der Steuerungen aus primärer Steuerung (12), sekundärer Steuerung (15) und Referenzsteuerung (18), die sog. sendende Steuerung so konfiguriert ist, dass sie periodisch ein Lebenssignal, das für die sendende Steuerung (12, 15, 18) spezifisch ist auf einem dritten Kommunikationsbus (CAN3) sendet, der die primäre Steuerung (12) mit dem primären Aktuator (14, 14', 14"), der Referenzsteuerung (18) und der sekundären Steuerung (15) verbindet, und/oder so konfiguriert ist, dass er periodisch das Lebenssignal, das für die sendende Steuerung (12, 15, 18) spezifisch ist, auf einem vierten Kommunikationsbus (CAN4) überträgt, der von dem dritten Kommunikationsbus (CAN3) verschieden ist und der die sekundäre Steuerung (15) mit dem sekundären Aktuator (16, 16'), der Referenzsteuerung (18) und der primären Steuerung (12) verbindet,
und wobei mindestens eine Steuerung aus primärer Steuerung (12), sekundärer Steuerung (15) und Referenzsteuerung (18), die nicht die sendende Steuerung ist, konfiguriert ist um einen Betriebszustand des dritten Kommunikationsbusses (CAN3) und/oder des vierten Kommunikationsbusses (CAN4) in Abhängigkeit von dem von der sendenden Steuerung empfangenen Lebenssignal zu bestimmen.

5. Steuervorrichtung nach einem der vorhergehenden Ansprüche, wobei die Steuervorrichtung (4) zwei getrennte Stromquellen umfasst, von denen eine erste Quelle so konfiguriert ist, dass sie die primäre Befehlskette (11) versorgt, und eine zweite Quelle so konfiguriert ist, dass sie die sekundäre Befehlskette (13) versorgt.

6. Steuervorrichtung nach einem der vorhergehenden Ansprüche, wobei die Anweisung für das automatische Fahren eine automatischen Lenkanweisung umfasst, der Primärbefehl einen primären Lenkbefehl umfasst, der es dem primären Aktuator (14) ermöglicht, ein Drehmoment zu erzeugen, das dem gelenkten Rad einen Lenkwinkel verleiht. Der Sekundärbefehl umfasst einen sekundären Lenkbefehl, der es dem sekundären Aktuator (16) ermöglicht, ein Drehmoment zu erzeugen, das dem gelenkten Rad einen Lenkwinkel verleiht.

7. Steuervorrichtung nach Anspruch 6, wobei der primäre Aktuator (14) so konfiguriert ist, dass er das Drehmoment nur dann erzeugt, wenn er ein Aktivierungssignal von der primären Steuerung (12) empfängt, wobei der primäre Aktuator (14) ansonsten kein Drehmoment erzeugt, und/oder
der sekundäre Aktuator (16) so konfiguriert ist, dass er das Drehmoment nur dann erzeugt, wenn er ein Aktivierungssignal von der sekundären Steuerung (15) empfängt, wobei der sekundäre Aktuator (16) ansonsten kein Drehmoment erzeugt.

8. Steuervorrichtung nach Anspruch 6 oder 7, wobei die Steuervorrichtung (4) mindestens einen Stromsensor (28, 30) umfasst, der so konfiguriert ist, dass er die Stärke eines elektrischen Stroms misst, der den primären Aktuator (14) oder den sekundären Aktuator (16) versorgt,
die primäre Steuerung (12) so konfiguriert ist, dass sie das Anhalten des primären Aktuators (14) steuert, wenn die von dem Stromsensor (28) gemessene Stromstärke über einem Schwellenwert liegt und wenn der sekundäre Aktuator (16) das Drehmoment erzeugt, das dem gelenkten Rad einen Lenkwinkel verleiht, und/oder die sekundäre Steuerung (15) so konfiguriert ist, dass sie die Stromversorgung des sekundären Aktuators (16) unterbricht, wenn die von dem Stromsensor (30) gemessene Stromstärke über einem Schwellenwert liegt und wenn der primäre Aktuator (14) das Drehmoment erzeugt, das dem Lenkrad einen Lenkwinkel verleiht.

9. Steuervorrichtung nach einem der Ansprüche 1 bis 5, wobei die Anweisung zum automatischen Fahren (10) eine automatische Bremsanweisung umfasst, der Primärbefehl einen primären Bremsbefehl umfasst, der es dem primären Aktuator (14') ermöglicht, einen hydraulischen Druck auf die Bremseinrichtung (32) in Abhängigkeit von dem primären Bremsbefehl auszuüben, damit die Bremseinrichtung (32) wiederum eine Bremskraft auf das Rad (6) mit der Bremseinrichtung (32) ausübt, und der Sekundärbefehl einen sekundären Bremsbefehl umfasst, der es dem sekundären Aktuator (16') ermöglicht, mit Hilfe der Bremseinrichtung (32) in Abhängigkeit von dem sekundären Bremsbefehl einen hydraulischen Druck zu erzeugen, damit die Bremseinrichtung (32) ihrerseits eine Bremskraft auf das Rad (6) mit der Bremseinrichtung (32) ausübt.

10. Steuervorrichtung nach Anspruch 9, wobei die Steuervorrichtung (4) mindestens zwei primäre Aktuatoren (14', 14") umfasst, von denen einer eine elektrisch betätigte Bremse und einer eine regenerative Bremse ist, die in einen elektrischen Motor des Fahrzeugs (1) integriert ist, wobei die elektrisch gesteuerte Bremse und die regenerative Bremse jeweils so konfiguriert sind, dass sie eine Bremskraft in Abhängigkeit vom primären Bremsbefehl ausüben.

11. Steuervorrichtung nach Anspruch 9 oder 10, wobei die primäre Steuerung (12) so konfiguriert ist, dass sie den sekundären Aktuator (16') nach einer vorbestimmten Zeitdauer, in der der primäre Aktuator (14') aktiviert ist, aktiviert, um das Fahrzeug (1) im Stillstand zu halten.

12. Steuervorrichtung nach einem der Ansprüche 9 bis 11, wobei die Steuervorrichtung (4) ferner mindestens einen Drucksensor (34, 35) umfasst, der so konfiguriert ist, dass er einen Hydraulikdruck misst, der in der Bremseinrichtung (32) vorhanden ist, und um eine Messung des hydraulischen Drucks an die primäre Steuerung (12) oder die sekundäre Steuerung (15) zu übertragen, um eine Diagnose der Funktion des primären Aktuators (14') und/oder des sekundären Aktuators (16') zu erstellen.

13. Autonomes Kraftfahrzeug (1), das mindestens ein Rad (6) mit Bremseinrichtungen (32) umfasst, die geeignet sind, eine Bremskraft auf das Rad (6) auszuüben, und mindestens ein gelenktes Rad, **dadurch gekennzeichnet, dass** das Fahrzeug (1) eine Steuervorrichtung (4) nach einem der vorhergehenden Ansprüche umfasst.

## Claims

1. A control device (4) for controlling an autonomous motor vehicle (1) in order to modify a steering angle of a steered wheel of the autonomous motor vehicle (1) and/or a braking force generated by braking means (32) fitted to a wheel of the autonomous motor vehicle (1), the control device (4) comprising:
- an automatic piloting system (10), which is configured to generate an automatic driving set point for automatically driving the vehicle (1);
- a primary command chain (11), which comprises a primary controller (12), configured to generate a primary command according to the automatic driving set point, and at least one primary actuator (14, 14', 14"), configured to generate a torque that confers a steering angle to the steered wheel, or configured to actuate the braking means (32) based on the primary command obtained directly from the primary controller (12);
- a secondary command chain (13), which is distinct from the primary command chain (11), comprising a secondary controller (15) configured to:
+ generate a secondary command according to said automatic driving set point;
+ compare said secondary command with said primary command transmitted by the primary controller (12) to the secondary controller (15); and
+ emit a first failure signal when the primary command differs from the secondary command;
- a reference controller (18), configured to:
+ generate a reference command according to the automatic driving set point;
+ compare the reference command with the primary command transmitted by the primary controller (12) to the reference controller (18); and
+ emit a second failure signal when the primary command differs from the reference command;
- an operation module (20), configured to interrupt an operation of the primary controller (12) upon reception of both the first failure signal and the second failure signal;
the secondary command chain (13) further comprising a secondary actuator (16, 16'), which acts as redundancy for the primary actuator (14, 14', 14") when the primary controller (12) is interrupted, the secondary actuator (16, 16') being configured to generate a torque that confers a steering angle to the steered wheel, or configured to actuate the braking means (32), based on the secondary command obtained directly from the secondary controller (15),
wherein the primary controller (12) is configured to compare the primary command with the secondary command, and to emit a third failure signal when the primary command differs from the secondary command,
the reference controller (18) being further configured to compare the reference command with the secondary command, and to emit a fourth failure signal when the secondary command differs from the reference command,
the control device (4) further comprising an additional operation module (22), configured to interrupt the operation of the secondary controller (15) upon reception of both the third failure signal and the fourth failure signal, et
wherein the reference controller (18) is configured, when it emits both the second failure signal and the fourth failure signal, to transmit a vehicle safety signal for securing the vehicle (1) to the automatic piloting system (10).

2. A control device according to claim 1, wherein
the secondary controller (15) is synchronised with the primary controller (12) so as to ensure that the primary and secondary commands are generated simultaneously; and/or
the reference controller (18) is synchronised with at least one controller from among the primary controller (12) and secondary controller (15), so as to ensure that the reference command and the command generated by said at least one controller are generated simultaneously.

3. A control device according to claim 1 or claim 2, wherein the automatic piloting system (10) is connected to the primary controller (12), to the reference controller (18) and to the secondary controller (15) both by a first communication bus (CAN1) and by a second communication bus (CAN2), that is distinct from the first communication bus (CAN1), at least one of said controllers (12, 15, 18) being configured to periodically emit a life signal, that is specific to this controller (12, 15, 18), on the first communication bus (CAN1) and on the second communication bus (CAN2), in order to determine the state of operation of the first communication bus (CAN1) and of the second communication bus (CAN2).

4. A control device according to any one of the previous claims, wherein at least one controller from among the primary controller (12), the secondary controller (15) and the reference controller (18), referred to as the transmitting controller, is configured to periodically emit a life signal that is specific to the transmitting controller (12, 15, 18), on a third communication bus (CAN3) that connects said primary controller (12) to the primary actuator (14, 14', 14"), to the reference controller (18) and to the secondary controller (15), and/or configured to periodically emit the life signal that is specific to the transmitting controller (12, 15, 18), on a fourth communication bus (CAN4), which is distinct from the third communication bus (CAN3), that connects the secondary controller (15) to the secondary actuator (16, 16'), to the reference controller (18) and to the primary controller (12),
and in which at least one controller from among the primary controller (12), the secondary controller (15) and reference controller (18), other than the transmitting controller, is configured to determine the state of operation of the third communication bus (CAN3) and/or of the fourth communication bus (CAN4) on the basis of said life signal received from the transmitting controller.

5. A control device according to any one of the previous claims, wherein the control device (4) comprises two distinct electrical power supply sources, of which a first source is configured to supply power to the primary command chain (11) and a second source is configured to supply power to the secondary command chain (13).

6. A control device according to any one of the previous claims, wherein the automatic driving set point comprises an automatic steering set point, the primary command comprises a primary steering command that enables the primary actuator (14) to generate a torque that confers a steering angle to the steered wheel, and the secondary command comprises a secondary steering command that enables the secondary actuator (16) to generate a torque that confers a steering angle to the steered wheel.

7. A control device according to claim 6, wherein the primary actuator (14) is configured to generate the torque only when it receives an activation signal from the primary controller (12), with the primary actuator (14) generating no torque otherwise; and/or
the secondary actuator (16) is configured to generate the torque only when it receives an activation signal from the secondary controller (15), with the secondary actuator (16) generating no torque otherwise.

8. A control device according to claim 6 or claim 7, the control device (4) comprising at least one current sensor (28, 30) configured to measure the intensity of an electric current supplying power to the primary actuator (14) or the secondary actuator (16),
the primary controller (12) being configured to command the stopping of the primary actuator (14) when the intensity of the current measured by the current sensor (28) is greater than a threshold value and when the secondary actuator (16) generates the torque that confers a steering angle to the steered wheel, and/or the secondary controller (15) being configured to interrupt the power supply to the secondary actuator (16) when the intensity of the current measured by the current sensor (30) is greater than a threshold value and when the primary actuator (14) generates the torque that confers a steering angle to the steered wheel.

9. A control device according to any one of claims 1 to 5, wherein the automatic driving set point comprises an automatic braking instruction, the primary command comprises a primary braking command that enables the primary actuator (14') to apply a hydraulic pressure to the braking means (32) in accordance with said primary braking command so as to ensure that the braking means (32) in turn apply a braking force to the wheel (6) that is provided with the braking means (32), and the secondary command comprises a secondary braking command that enables the secondary actuator (16') to generate a hydraulic pressure with the braking means (32) in accordance with said secondary braking command so as to ensure that the braking means (32) in turn apply a braking force to the wheel (6) that is provided with the braking means (32).

10. A control device according to claim 9, the control device (4) comprising at least two primary actuators (14', 14"), wherein one is an electrically controlled brake and the other one is a regenerative brake integrated in an electric motor of the vehicle (1), each of the electrically controlled brake and the regenerative brake being configured to apply a braking force based on the primary braking command.

11. A control device according to claim 11 or claim 10, wherein the primary controller (12) is configured to activate the secondary actuator (16') after a predetermined time period during which the primary actuator (14') is activated in order to maintain/keep the vehicle (1) in stationary position.

12. A control device according to any one of claims 9 to 11, wherein the control device (4) further comprises at least one pressure sensor (34, 35) configured to measure a hydraulic pressure present in the braking means (32), and to transmit a measurement of the hydraulic pressure to the primary controller (12) or to the secondary controller (15) for establishing the diagnostics of the operation of the primary actuator (14') and/or of the secondary actuator (16').

13. An autonomous motor vehicle (1), comprising at least one wheel (6) that is provided with braking means (32) that are capable of applying a braking force to said wheel (6), and at least one steered wheel, **characterized in that** the vehicle (1) comprises a control device (4) according to any one of the previous claims.
